# EUROPÄISCHE PATENTSCHRIFT

(11) **EP 3 055 127 B1**
(45) Veröffentlichungstag und Bekanntmachung des Hinweises auf die Patenterteilung: **30.08.2017**
(21) Anmeldenummer: 13776475.9
(22) Anmeldetag: 11.10.2013
(51) Int. Cl.: B32B 5/02, B32B 27/08, B32B 27/40, E04F 15/02

(54) **ELASTISCHER BODENBELAG IN FORM EINER AUFROLLBAREN BAHNENWARE**
ELASTIC FLOOR COVERING IN THE FORM OF A WEB PRODUCT THAT CAN BE ROLLED UP
REVÊTEMENT DE SOL ÉLASTIQUE SE PRÉSENTANT SOUS LA FORME D'UNE BANDE DE MATIÈRE POUVANT ÊTRE ENROULÉE

(43) Veröffentlichungstag der Anmeldung: 17.08.2016
(73) Patentinhaber: WPT GmbH, 32756 Detmold (DE)
(72) Erfinder: ROSE, Stefan, 59581 Warstein (DE); HORST, Guido, 32139 Spenge (DE); WINDMÖLLER, Ulrich, 33758 Schloss Holte-Stukenbrock (DE)
(74) Vertreter: Ter Meer Steinmeister & Partner
(86) Internationale Anmeldenummer: PCT/EP2013/071274
(87) Internationale Veröffentlichungsnummer: WO 2015/051851

(56) Entgegenhaltungen:
- WO-A1-99/19557
- DE-A1- 10 229 473
- DE-A1-102005 025 980
- US-A1- 2011 268 933

## Beschreibung

Die vorliegende Erfindung betrifft einen elastischen Bodenbelag in Form einer aufrollbaren Bahnenware, mit einem weichen Kern aus Polyurethan und einem auf dem Kern angeordneten Schichtverbund.

Derartige Bodenbeläge werden schon seit längerer Zeit aus Kunststoffmaterialien hergestellt, beispielsweise aus PVC oder Linoleum. Ferner eignet sich Polyurethan als Material für solche Bodenbeläge. Beispielsweise ist aus der internationalen Patentanmeldung WO2013/064160 der Anmelderin ein Bodenbelag bekannt, bei welchem zumindest der Kern aus einem Polyurethan besteht, das aus einem Polyesterpolyol aus nachwachsenden Rohstoffen und aromatischem Isocyanat gewonnen wird. Dies bringt unter anderem Vorteile bezüglich der Unweltverträglichkeit mit sich. Dieser Bodenbelag umfasst ferner eine auf dem Kern angeordnete Dekorschicht und eine abnutzungsbeständige Nutzschicht. Die auf dem Kern liegenden Schichten sollen im Rahmen der vorliegenden Anmeldung allgemein als Schichtverbund bezeichnet werden, wobei angemerkt wird, dass dieser Schichtverbund auch anders ausgestaltet sein kann und beispielsweise zusätzliche oder anders geartete Schichten umfassen kann. Der hier verwendete Begriff des Schichtverbundes ist somit nicht auf die Schichtfolge beschränkt, die in der WO2013/064160 beschrieben ist.

Aufgrund der Flexibilität eines solchen Bodenbelags lässt sich dieser einfach in Rollengebinden anliefern und durch Aufkleben auf den Estrich verlegen. Die Flexibilität führt auch zu positiven Gebrauchseigenschaften wie etwa einer guten Trittschalldämmung. Auch die Dimensionsstabilität, das Eindruckverhalten bei Belastungen und die sportfunktionellen Eigenschaften im Hinblick auf den Kraftabbau können, je nach Verwendung des Bodenbelags, ausschlaggebend für seine Qualität sein.

Um den Bodenbelag zuverlässig vollflächig auf dem Untergrund verkleben zu können, muss seine Rückseite einen guten Verbund mit dem Klebstoff eingehen können. Bisher war es daher üblich, die Rückseite des Bodenbelags anzuschleifen oder mit einer Oberflächenstruktur zu versehen, wie etwa einer Wabenstruktur oder dergleichen, in die der Klebstoff gut eindringen kann. Trotz dieser zusätzlichen Maßnahmen ist der Halt zwischen dem Dispersionskleber und der Rückseite des Bodenbelags häufig nicht zufriedenstellend. Es ist außerdem erwünscht, die oben genannten positiven Eigenschaften des Belags auch durch eine entsprechende Ausgestaltung seiner Rückseite weiter zu verbessern.

Es ist daher ein Ziel der vorliegenden Erfindung, die Haftung des Bodenbelags auf dem Untergrund und insbesondere den Zusammenhalt mit einem darauf aufgebrachten Klebstoff zu verbessern und darüber hinaus die Eigenschaften des Bodenbelags, insbesondere die Trittschalldämmung und die Elastizität, weiter zu verbessern.

Diese Aufgabe wird erfindungsgemäß durch einen Bodenbelag mit den Merkmalen des Anspruchs 1 gelöst.

Der bahnenförmige und aufrollbare elastische Bodenbelag gemäß der vorliegenden Erfindung weist auf seiner Rückseite eine Fasermatte auf, deren Fasern aus Glas, PET, PP, Polyester oder nachwachsenden Rohstoffen bestehen. Das Fasergebilde der Matte ist auf der Seite, die dem Kern zugewandt ist, durch eine Sperrschicht abgedichtet.

Zwischen die Fasern der Matte kann ein flüssiger Klebstoff eindringen, der auf dem Estrich ausgebracht worden ist, so dass der Klebstoff und die Fasermatte und somit der gesamte Bodenbelag einheitlich miteinander verbunden werden. Diese Verbindung ist weit zuverlässiger als bei Bodenbelägen, die lediglich an ihrer Unterseite angeschliffen sind oder eine Prägung auf ihrer Rückseite aufweisen. Ein Anheben des verlegten Bodenbelages ist zerstörungsfrei nicht mehr möglich. Die Sperrschicht sorgt dafür, dass beim Herstellungsprozess des Bodenbelags die Fasermatte auf dessen Rückseite aufkaschiert oder aufgeklebt werden kann, ohne dass die Zwischenräume zwischen den Fasern durch einen Klebstoff oder das Material des Kerns, je nach Herstellungsverfahren, ausgefüllt oder verklebt werden. Im Herstellungsprozess kann somit ein flüssiges Material auf die Fasermatte aufgetragen werden, ohne dass deren gewünschte Eigenschaften bei der Verwendung beeinträchtigt werden.

Die Fasermatte kann aufgrund des vergleichsweise lockeren Zusammenhalts ihrer Faser eine gewisse Elastizität aufweisen, die sich positiv auf die Gesamteigenschaften des Bodenbelags auswirkt. Beispielsweise kann die Trittschalldämmung verbessert werden, und auch die Krafteinleitung in Bodenbeläge, die als Sportböden verwendet werden. Schließlich kann die Fasermatte auch eine Gegenzugschicht zu dem Schichtverbund auf der Oberseite des Bodenbelags bilden.

Insgesamt stellt der vorliegende Bodenbelag ein komplexes Schichtgebilde dar, das gegenüber den Bodenbelägen, die oben als Stand der Technik beschrieben sind, verbesserte Eigenschaften aufweist und zugleich zuverlässiger und dauerhafter zu verlegen ist.

Gemäß einer bevorzugten Ausführungsform der vorliegenden Erfindung bilden die Fasern der Fasermatte ein Vlies.

Gemäß einer weiteren bevorzugten Ausführungsform sind die Fasern miteinander zu einer Gewebematte verwoben.

In beiden Fällen können zwischen den Fasern Zwischenräume verbleiben, in die der flüssige Kleber eindringen kann und somit den erwünschten Verbund mit dem Bodenbelag eingeht.

Gemäß einer weiteren bevorzugten Ausführungsform ist die Fasermatte auf die Rückseite des Kerns aufgeklebt. Der hierzu verwendete Kleber dringt nicht in das Vlies ein, da dies durch die Sperrschicht zuverlässig verhindert wird. Die Zwischenräume zwischen den Fasern bleiben somit zur Aufnahme des Klebers zum Aufkleben des Bodenbelags auf den Estrich erhalten.

Gemäß einer weiteren bevorzugten Ausführungsform ist die Sperrschicht aus Polyolefin, Polyethylenterephtalat (PET), Polyamid (PA) oder thermoplastischem Polyurethan (TPU) gebildet.

Weiter vorzugsweise besteht der Kern aus einem Polyurethan, das aus einem Polyesterpolyol aus nachwachsenden Rohstoffen und aromatischem Isocyanat gewonnen wird. Hierbei handelt es sich um ein biogenes Polyol, das gute Eigenschaften hinsichtlich der Umweltverträglichkeit aufweist und sich nachhaltig produzieren lässt. Der Kern kann zudem Füllstoffe zur Gewichtserhöhung enthalten.

Gemäß einer weiteren bevorzugten Ausführungsform der vorliegenden Erfindung umfasst der Schichtverbund des Bodenbelags, der auf dem Kern angeordnet ist, zumindest eine Dekorschicht, die aus einem Zellstoffpapier besteht, das mit Polyurethan imprägniert ist, eine auf der dem Kern abgewandten Seite der Dekorschicht liegende Nutzschicht, die aus einem Polyurethan besteht, das aus einem Polyol und einem aliphatischen Isocyanat gewonnen wird, und eine Glasfasermatte. Diese kann das Eindruckverhalten und das Rückstellverhalten sowie die Dimensionsstabilität weiter verbessern.

Ein erfindungsgemäßes Verfahren zur Herstellung eines Bodenbelags der vorstehend beschriebenen Art umfasst die folgenden Schritte:
a) Ablegen einer Fasermattenbahn, die aus Fasern aus Glas, PET, PP, Polyester oder nachwachsenden Rohstoffen gebildet wird und einseitig durch eine Sperrschicht abgedichtet ist, auf einem Trägerband, derart, dass sich die Sperrschicht oben befindet;
b) Auftragen einer Schicht aus Polyurethan auf die Fasermatte zur Bildung des Kerns;
c) Auftragen eines Klebstoffs auf die Oberseite des Kerns; und
d) Aufkleben eines bahnförmigen Schichtverbundes auf die mit Klebstoff versehene Oberseite des Kerns.

Die Fasermattenbahn kann in dem vorstehend genannten Schritt a) beispielsweise auf einem Transportband abgelegt werden, das über eine Heizplatte läuft. Die Polyurethanschicht, die zur Bildung des Kerns in Schritt b) auf die Fasermatte aufgetragen wird, kann unter der Wärmeeinwirkung der Heizplatte ausreagieren. Aufgrund der Sperrschicht der Fasermatte kann das im flüssigen Zustand aufgetragene Polyurethan nicht zwischen die Fasern der unten liegenden Fasermattenbahn eindringen, so dass die Zwischenräume zwischen den Fasern erhalten bleiben. Der Schichtverbund, der in dem abschließenden Schritt d) aufgeklebt wird, kann bereits vorgefertigt vorhanden sein.

Bei den vorstehend genannten Verfahren wird der erfindungsgemäße elastische Bodenbelag also gewissermaßen von unten nach oben aufgebaut, d.h. die Fasermattenbahn auf seiner Rückseite wird zunächst abgelegt, und die darüber angeordneten Schichten werden gemäß ihrer Schichtfolge bis zur Oberseite hin aufgetragen.

Gemäß einer alternativen Ausführungsform der vorliegenden Erfindung umfasst das Verfahren zur Herstellung dieses Bodenbelags die folgenden Schritte.
a') Ablegen eines bahnförmigen Schichtverbundes auf einem Trägerband;
b') Auftragen einer Schicht aus Polyurethan auf den bahnförmigen Schichtverbund zur Bildung des Kerns;
c') Auftragen eines Klebstoffs auf die Oberseite des Kerns; und
d') Aufkleben einer Fasermattenbahn, die aus Fasern aus Glas, PET, PP, Polyester oder nachwachsenden Rohstoffen gebildet wird und einseitig durch eine Sperrschicht abgedichtet ist, auf die mit Klebstoff versehene Oberseite des Kerns, derart, dass sich die Sperrschicht unten befindet.

Bei diesem alternativen Verfahren werden die Schichten in umgekehrter Reihenfolge hergestellt, indem zunächst der Schichtverbund, der im verlegten Zustand die Oberseite des Bodenbelags bildet, mit der Nutzseite nach unten auf dem Trägerband in Schritt a') abgelegt wird und die weiteren Schichten der Reihe nach aufgetragen werden, bis zu der abschließend in Schritt d') aufgeklebten Fasermattenbahn, die die Rückseite des Bodenbelags bildet. Der Bodenbelag liegt dann abschließend mit seiner Nutzseite nach unten auf dem Trägerband auf. Die Sperrschicht der Fasermattenbahn verhindert hier, dass der auf die Oberseite des Kerns in Schritt c') aufgetragene Klebstoff zwischen die Fasern eindringen und diese verkleben kann.

Vorzugsweise wird während oder nach den oben genannten Schritten c) bzw. c') der Polyurethanschicht zur Bildung des Kerns Wärme zugeführt. Dies kann beispielsweise durch die bereits erwähnten Heizplatten unter dem Trägerband erfolgen. Alternativ ist es jedoch auch möglich, Infrarotstrahlung von oben auf die Polyurethanschicht einwirken zu lassen.

Vorzugsweise ist die Fasermattenbahn in diesem Fall eine Vliesbahn.

Weiter vorzugsweise ist die Fasermattenbahn eine Gewebebahn.

Gemäß einer weiteren bevorzugten Ausführungsform dieses Verfahrens ist die Sperrschicht aus Polyolefin, Polyethylenterephtalat (PET), Polyamid (PA) oder thermoplastischem Polyurethan (TPU) gebildet.

Gemäß einer bevorzugten Ausführungsform des erfindungsgemäßen Verfahrens wird der Kern in Schritt b) bzw. b') aus einem Polyurethan gebildet, das aus einem Polyesterpolyol aus nachwachsenden Rohstoffen und aromatischem Isocyanat gewonnen wird.

Weiter vorzugsweise wird der bahnförmige Schichtverbund in Schritt d) bzw. a') im vorgefertigten Zustand ab- bzw. aufgelegt und umfasst zumindest eine Dekorschicht, die aus einem Zellstoffpapier besteht, das mit Polyurethan imprägniert ist, eine auf der dem Kern abgewandten Seite der Dekorschicht liegende Nutzschicht, die aus einem Polyurethan besteht, das aus einem Polyol und einem aliphatischen Isocyanat gewonnen wird, und eine Glasfasermatte auf der dem Kern zugewandten Seite der Dekorschicht.

Vorzugsweise wird in Schritt c) bzw. c') der Klebstoff zerstäubt und in Tropfenform aufgetragen.

Im folgenden werden bevorzugte Ausführungsbeispiele der vorliegenden Erfindung anhand der Zeichnung näher erläutert.
- Fig. 1: zeigt einen schematischen Schnitt durch den Schichtaufbau einer Ausführungsform des erfindungsgemäßen elastischen Bodenbelags, und
- Fig. 2 und 3: sind schematische Darstellungen zweier verschiedener Verfahrensabläufe zur Herstellung des erfindungsgemäßen Bodenbelags.

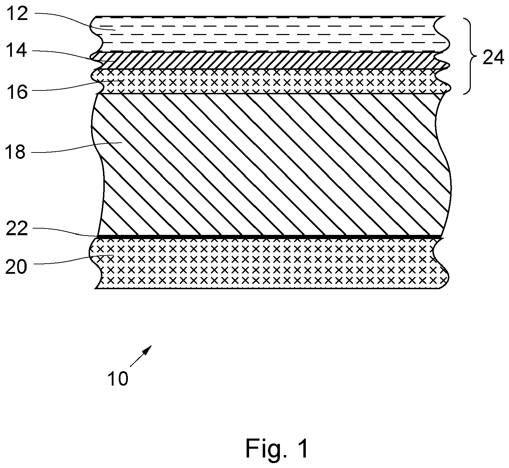

In Fig. 1 ist ein Querschnitt durch einen bahnenförmigen Bodenbelag 10 dargestellt, der einen Schichtaufbau aufweist. Dieser umfasst (von oben nach unten, d.h. von seiner Nutzseite zu seiner Rückseite) eine transparente Nutzschicht 12, die die Oberseite des Bodenbelags 10 bildet, eine darunter liegende Dekorschicht 14, die ein Dekor trägt, eine Glasfasermatte 16 unter der Dekorschicht 14, einen weichen Kern 18 und eine Fasermatte 20, die den Schichtaufbau des Bodenbelags 10 zum Untergrund hin abschließt. Einzelheiten dieses Schichtaufbaus sollen im folgenden näher beschrieben werden.

Die Nutzschicht 12 besteht vollständig aus einem Polyurethan (PU), das aus einem aus einem Polyol und einem aliphatischen Isocyanat synthetisiert worden ist. Dieses Polyol ist im vorliegenden Fall kein biogenes Polyol und stammt somit nicht aus nachwachsenden Rohstoffen. Ferner weist die Nutzschicht 12 eine hohe Kratzfestigkeit, Reinigungsfreundlichkeit, UV-Stabilität, ein gutes Eindruckverhalten und Rückstellverhalten und niedrige Emissionen toxischer Gase im Brandfall auf. Unter dem Eindruckverhalten ist das Verhalten des Materials bei einer mechanischen Belastung zu verstehen. Die Oberfläche des Bodenbelags 10 ist sehr widerstandsfähig gegenüber solchen Einwirkungen. Falls sich Eindrücke bilden, beispielsweise durch eine punktuelle Belastung, so werden diese nahezu vollständig wieder zurückgebildet, wenn die mechanische Last entfernt wird.

Bei der vorliegenden Ausführungsform weist die Nutzschicht 12 eine Dicke zwischen 0,1 und 0,5 mm auf.

Der unter der Nutzschicht 12 befindliche Dekorfilm 14 besteht aus einem Dekorpapier, nämlich einer Zellstoffschicht, die mit Polyurethan getränkt ist. Dieses Polyurethan kann aus einem biogenen Polyol synthetisiert worden sein, das also aus einem nachwachsenden Rohstoff gewonnen wird. Das Dekorpapier ist auf seiner Oberseite mit einem Dekor bedruckt.

Zur Erhöhung der Dimensionsstabilität und zur weiteren Verbesserung des Eindruck- und Rückstellverhaltens des Bodenbelags 10 umfasst der Schichtaufbau ferner eine Glasfasermatte 16, die zwischen der Dekorschicht 14 und dem darunter liegenden Kern 18 angeordnet ist. Diese Glasfasermatte ist ebenfalls mit Polyurethan getränkt, das aus einem biogenen Polyol hergestellt wird. Sie hat eine Dicke zwischen 0,2 mm und 0,5 mm.

Der Kern 18 besteht im vorliegenden Fall aus einem Polyurethan, das aus einem Polyesterpolyol aus nachwachsenden Rohstoffen und aromatischem Isocyanat gewonnen wird. Aromatisches Polyol ist zwar weniger hochwertig als aliphatisches Polyol, doch da der Kern 18 nicht an der Oberseite des Bodenbelags 10 frei liegt, kann hier auch die Verwendung von Werkstoffen in Kauf genommen werden, die weniger hochwertig sind. Dennoch hat der Kern 18 sehr gute Eigenschaften hinsichtlich der Umweltverträglichkeit und ist sehr emissionsarm. Der Kern 18 kann zudem Füllstoffe zur Gewichtserhöhung enthalten.

Der hier dargestellte Bodenbelag 10 ist dazu vorgesehen, in Bahnen auf einem Estrich aufgeklebt zu werden. Zu diesem Zweck umfasst der Bodenbelag 10 auf seiner Rückseite eine Fasermatte 20, bei der es sich beispielsweise um eine Vliesmatte handeln kann. Denkbar ist jedoch auch die Verwendung einer Gewebematte als Fasermatte 20. Zwischen die Fasern kann ein flüssiger Dispersionskleber eindringen, der auf dem Estrich zuvor verteilt worden ist. Auf diese Weise wird ein fester Verbund zwischen dem Untergrund und dem elastischen Bodenbelag 10 geschaffen. Der Bodenbelag 10 lässt sich dann nicht mehr zerstörungsfrei vom Untergrund entfernen.

Die Fasern der Fasermatte 20 können beispielsweise Glasfasern sein oder aus PET (Polyethylentherephtalat), PP (Polypropylen), Polyester oder auch aus nachwachsenden Rohstoffen bestehen, also Naturfasern sein. Auf der Seite, die dem Kern 18 zugewandt ist und die sich in Fig. 1 oben befindet, ist die Fasermatte 20 durch eine Sperrschicht 22 aus Polyolefin abgedichtet. Die Sperrschicht 22 kann allerdings auch aus anderen Materialien bestehen, beispielsweise aus Polyethylenterephtalat (PET), Polyamid (PA) oder thermoplastischem Polyurethan (TPU). Diese Sperrschicht 22 hat unter anderem die Funktion, dass von der Oberseite des Bodenbelags 10 her keine Flüssigkeiten in die Fasermatte 20 eindringen können und somit die Zwischenräume zwischen den Fasern ausfüllen. Dies ist für die Herstellung des elastischen Bodenbelags 10 von Bedeutung. Insbesondere kann beispielsweise die Fasermatte 20 mit Hilfe eines flüssigen Klebstoffs auf die Rückseite des Kerns 18 aufgeklebt sein. Die Sperrschicht 22 verhindert somit, dass dieser Klebstoff zwischen dem Kern 18 und der Fasermatte 20 zwischen die Fasern eindringt.

Neben der Funktion, den Klebstoff zum Aufkleben des Bodenbelags 10 aufzunehmen, kann die Fasermatte 20 darüber hinaus noch weitere Funktionen haben, die sich auf die Qualität des Bodenbelags 10 auswirken. Beispielsweise kann die Fasermatte 20 eine Gegenzugschicht auf der Unterseite des Bodenbelags 10 bilden und zu dessen Dimensionsstabilität beitragen. Ferner kann die Fasermatte 20 aufgrund des relativ lockeren Faserbunds eine gewisse Elastizität gegenüber Druckbelastungen aufweisen, die auch dann gewahrt bleibt, wenn der Klebstoff vom Untergrund her nicht vollständig in die Fasermatte 20 eindringt und eine klebstofffreie Zwischenschicht innerhalb der Fasermatte 20 verbleibt, deren Hohlräume die elastischen Eigenschaften verbessern. Auch das Trittschallverhalten und die Krafteinleitung in den Untergrund können hierdurch verbessert werden.

Die Aufrollbarkeit des Bodenbelags 10 wird durch die Anbringung der Fasermatte 20 nicht beeinträchtigt. Der vorliegende elastische Bodenbelag 10 hat die Form einer aufrollbaren Bahn, also einer Bahnenware, die als Rollengebinde angeliefert werden kann und einfach bahnenweise zu verlegen ist.

Die Nutzschicht 12, die Dekorschicht 14 und die Glasfasermatte 16 bilden einen gemeinsamen Schichtverbund 24, der in einem Herstellungsverfahren zur Herstellung des vorstehend beschriebenen Bodenbelags 10 vorproduziert werden kann, während die übrigen Schichten, also insbesondere der Kern 18 und die Fasermatte 20 erst nachfolgend mit diesem Schichtverbund 24 verbunden werden. Dies soll im einzelnen nachfolgend beschrieben werden.

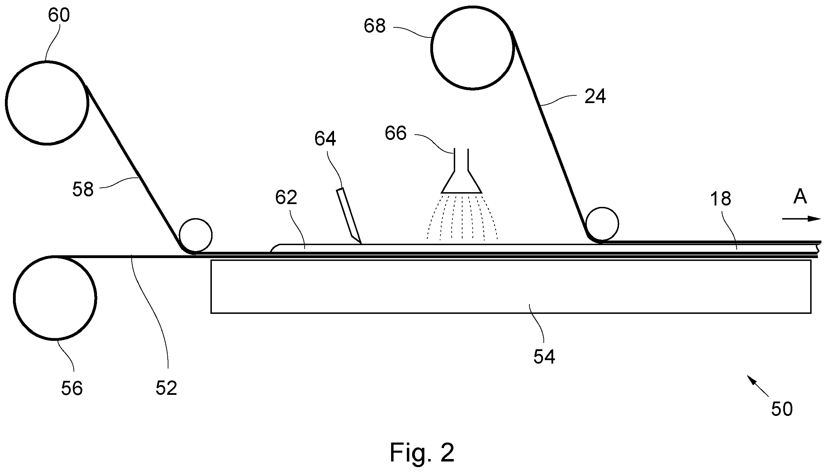

Fig. 2 ist eine schematische Darstellung einer ersten Ausführungsform eines Verfahrens zur Herstellung des aufrollbaren bahnenförmigen Bodenbelags 10 der vorstehend beschriebenen Art. Diese Figur zeigt einen Teil einer Produktionsanlage, mit deren Hilfe dieses Verfahren ausgeführt wird. Die Anlage 50 umfasst ein Trägerband 52, das in Fig. 2 von links nach rechts in Richtung des Pfeils A über eine Heizplatte 54 geführt wird. Auf der Oberseite der Heizplatte 54 liegt das Trägerband 52 flach auf. Es kann sich hierbei um ein Endlosband handeln, dessen Obertrum über die Heizplatte 54 geführt wird, oder aber das Trägerband 52 wird von einer Rolle 56 abgerollt und am Ende der Produktionsstrecke (nicht dargestellt) wieder aufgerollt. Auf diesem Trägerband 52 wird der Bodenbelag 10 gebildet, indem zunächst eine Fasermattenbahn 58 von einer Rolle 60 abgewickelt wird und flach auf den Abschnitt des Trägerbands 52 abgelegt wird, der auf der Heizplatte 54 aufliegt. Diese Fasermattenbahn 58 entspricht in ihrer Ausführung der im Zusammenhang mit Fig. 1 beschriebenen Fasermatte 20, d.h. die Fasermattenbahn 58 wird aus Fasern aus Glas, PET, PP, Polyester oder nachwachsenden Rohstoffen gebildet und ist einseitig durch eine Sperrschicht 22 aus Polyolefin, Polyethylenterephtalat (PET), Polyamid (PA) oder thermoplastischem Polyurethan (TPU) abgedichtet. Diese Sperrschicht 22 liegt in Fig. 2 oben, d.h. auf der dem Trägerband 52 abgewandten Oberseite der Fasermattenbahn 58, die im übrigen wahlweise als Vlies oder auch als Gewebematte ausgebildet sein kann.

In einem nachfolgenden Verfahrensschritt wird auf die abgelegte Fasermattenbahn 58 eine Schicht 62 aus Polyurethan aufgetragen, welche den Kern 18 bilden soll. Das Polyurethan dieser Schicht 62 wird in flüssiger Form auf die Fasermattenbahn 58 gegossen oder gespritzt. Durch eine Rakel 64 wird die Dicke der Schicht 62 bestimmt, welche durch geeignete Messvorrichtungen kontrolliert werden kann (nicht dargestellt).

Das flüssige Polyurethan reagiert unter Wärmeeinwirkung aus, so dass die Schicht 62 erhärtet. Die Wärme wird durch die Heizplatte 54 unter dem Trägerband 52 zugeführt, welche durch das Trägerband 52 und die Fasermattenbahn 58 hindurch in die Schicht 62 hinein wirkt. Der Kern 18 ist nach dem Ausreagieren der Schicht 62 vollständig hergestellt. Anschließend kann in einem weiteren Verfahrensschritt ein Klebstoff auf die Oberseite des Kerns 18 aufgetragen werden. Der Klebstoff muss nicht kontinuierlich flächig aufgetragen werden, sondern kann auch in Form feiner Tröpfchen aufgesprüht werden. Hierzu kann beispielsweise ein Drehteller 66 dienen, der über dem Kern 18 angeordnet ist und flüssigen Klebstoff radial versprüht, so dass eine annähernd gleichmäßige Verteilung der Klebstofftröpfchen auf dem Kern 18 erreicht wird.

Abschließend wird in einem weiteren Verfahrensschritt ein bahnenförmiger Schichtverbund 24 auf den Kern 18 aufgebracht und mit diesem verklebt. Dieser Schichtverbund 24 kann beispielsweise in der oben beschriebenen Weise die Nutzschicht 12, die Dekorschicht 14 und die Glasfasermatte 16 aus Fig. 1 umfassen. Der Schichtverbund 24 wird in vorgefertigter Form angeliefert und von einer Rolle 68 abgewickelt und auf der mit dem Klebstoff versehenen Oberseite des Kerns 18 abgelegt.

Durch die vorstehend beschriebenen Verfahrensschritte wird eine aufrollbare Bahn des elastischen Bodenbelags 10 geschaffen.

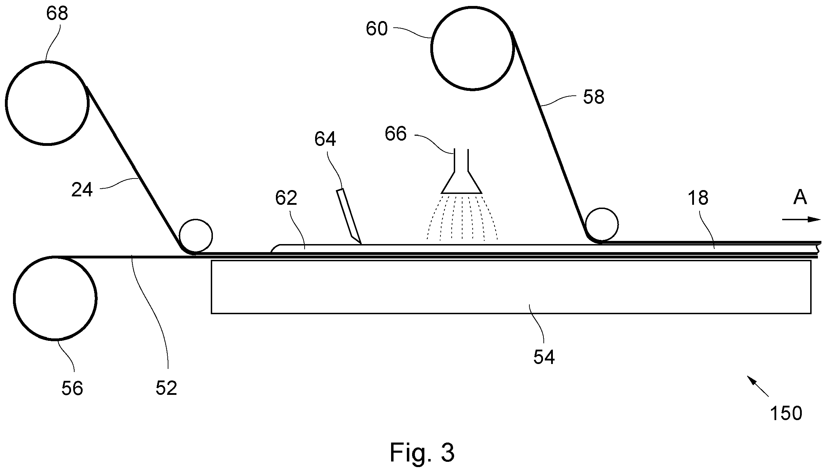

Alternativ zu dem vorstehend anhand von Fig. 2 beschriebenen Verfahren ist es möglich, den Bodenbelag 10 gewissermaßen in umgekehrter Reihenfolge aufzubauen. Dies soll nachfolgend anhand von Fig. 3 beschrieben werden.

Die Produktionsanlage 150 in Fig. 3 umfasst ebenfalls ein Trägerband 52, das von einer Rolle 60 abgewickelt wird und flach über eine horizontale Heizplatte 54 geführt wird. Diesbezüglich ist die Anlage 150 in Fig. 3 mit der Anlage 50 aus Fig. 2 identisch. Auf die Oberseite dieses Trägerbandes 52 wird der bahnförmige Schichtverbund 24 abgelegt, der von einer Rolle 68 abgespendet wird, so dass er flach auf der Oberseite des Trägerbands 54 aufliegt und mit diesem zusammen in Richtung des Pfeils A über die Heizplatte 54 geführt wird. Der bahnförmige Schichtverbund 24 umfasst auch hier wieder die Nutzschicht 12, die Dekorschicht 14 und die Glasfasermatte 16 und wird so auf dem Trägerband 52 abgelegt, dass sich die Nutzschicht 12 unten befindet und die Glasfasermatte 16 oben.

Auf den abgelegten bahnförmigen Schichtverbund 24 wird anschließend eine Schicht 62 aus flüssigem Polyurethan zur Bildung des Kerns 18 aufgetragen. Diese Schicht 62 wird mittels einer Rakel 64 auf die gewünschte Schichtdicke begrenzt. Die Schicht 62 kann unter Einwirkung der Wärme der Heizplatte 54, die durch das Trägerband 52 und den Schichtverbund 24 hindurch wirkt, aushärten. Es wird angemerkt, dass statt der Heizplatte 54 auch eine andere Wärmequelle eingesetzt werden kann, etwa eine Quelle für Infrarotstrahlung, die sich über der Schicht 62 befindet.

Unter der Wärmeinwirkung reagiert das Polyurethan der Schicht 62 aus und bildet den Kern 18. Auf diesen Kern wird ein Klebstoff aufgetragen. Im vorliegenden Fall wird der Klebstoff mittels eines Drehtellers 66 zerstäubt und radial über die Oberseite der Schicht 62 verteilt.

Anschließend wird die Fasermattenbahn 58 auf die Oberseite des Kerns 18 aufgelegt und mit diesem verklebt. Die Fasermattenbahn 58 wird von einer Rolle 60 abgerollt und derart auf den Kern 18 aufgelegt, dass sich die Sperrschicht 22 unten befindet, d.h. dem Kern 18 zugewandt ist. Durch die Sperrschicht 22 wird verhindert, dass der Klebstoff, der die Verbindung zwischen dem Kern 18 und der Fasermattenbahn 58 schafft, zwischen die Fasern der Fasermattenbahn 58 eindringen kann. Die Fasermattenbahn 58 kann beispielsweise eine Vliesbahn oder eine Gewebebahn sein.

Bei dieser Ausführungsform des Verfahrens zur Herstellung des Bodenbelags 10 befindet sich also die Nutzseite unten, und die Rückseite des Bodenbelags 10 ist nach oben gewandt.

Das Polyurethan zur Bildung der Schicht 62 des Kerns 18 kann auch im vorliegenden Fall aus einem Polyesterpolyol aus nachwachsenden Rohstoffen und aromatischem Isocyanat gewonnen werden. Der Kern 18 kann auch hier Füllstoffe zur Gewichtserhöhung enthalten. Die Dekorschicht 14 des Schichtverbunds 24 kann auch wiederum aus Zellstoffpapier bestehen, das mit Polyurethan imprägniert ist, und die Nutzschicht 12 kann aus einem Polyurethan bestehen, das aus einem Polyol und einem aliphatischen Isocyanat gewonnen wird.

Das Produkt des im Zusammenhang mit Fig. 3 beschriebenen Verfahrens ist ebenfalls eine aufrollbare Bahnenware mit der gewünschten Elastizität. Sie kann zu Rollengebinden aufgerollt und somit leicht transportiert und verlegt werden.

## Patentansprüche

1. Elastischer Bodenbelag (10) in Form einer aufrollbaren Bahnenware, mit einem weichen Kern (18) aus Polyurethan und einem auf dem Kern (18) angeordneten Schichtverbund (24), **dadurch gekennzeichnet, dass** die Rückseite des Bodenbelags (10) durch eine Fasermatte (20) gebildet wird, deren Fasern aus Glas, PET, PP, Polyester oder nachwachsenden Rohstoffen bestehen und die auf ihrer dem Kerm (18) zugewandten Seite durch eine Sperrschicht (22) abgedichtet ist.

2. Bodenbelag gemäß Anspruch 1, **dadurch gekennzeichnet, dass** die Fasern ein Vlies bilden.

3. Bodenbelag gemäß Anspruch 1, **dadurch gekennzeichnet, dass** die Fasern miteinander zu einer Gewebematte verwoben sind.

4. Bodenbelag gemäß einem der vorhergehenden Ansprüche, **dadurch gekennzeichnet, dass** die Fasermatte (20) auf die Rückseite des Kerns (18) aufgeklebt ist.

5. Bodenbelag gemäß einem der vorhergehenden Ansprüche, **dadurch gekennzeichnet, dass** die Sperrschicht (22) aus Polyolefin, Polyethylenterephtalat (PET), Polyamid (PA) oder thermoplastischem Polyurethan (TPU) gebildet ist.

6. Bodenbelag gemäß einem der vorhergehenden Ansprüche, **dadurch gekennzeichnet, dass** der Kern (18) aus einem Polyurethan besteht, das aus einem Polyesterpolyol aus nachwachsenden Rohstoffen und aromatischem Isocyanat gewonnen wird.

7. Bodenbelag gemäß einem der vorhergehenden Ansprüche, **dadurch gekennzeichnet, dass** der Schichtverbund (24) zumindest eine Dekorschicht (14) umfasst, die aus einem Zellstoffpapier besteht, das mit Polyurethan imprägniert ist, eine auf der dem Kern (18) abgewandten Seite der Dekorschicht (14) liegende Nutzschicht (12), die aus einem Polyurethan besteht, das aus einem Polyol und einem aliphatischen Isocyanat gewonnen wird, und eine Glasfasermatte (16).

8. Verfahren zur Herstellung eines Bodenbelags gemäß einem der Ansprüche 1 bis 7, **gekennzeichnet durch** die folgenden Schritte:
a) Ablegen einer Fasermattenbahn (58), die aus Fasern aus Glas, PET, PP, Polyester oder nachwachsenden Rohstoffen gebildet wird und einseitig durch eine Sperrschicht (22) abgedichtet ist, auf einem Trägerband (52), derart, dass sich die Sperrschicht (22) oben befindet;
b) Auftragen einer Schicht (62) aus Polyurethan auf die Fasermattenbahn (58) zur Bildung des Kerns (18);
c) Auftragen eines Klebstoffs auf die Oberseite des Kerns (18); und
d) Aufkleben eines bahnförmigen Schichtverbundes (24) auf die mit Klebstoff versehene Oberseite des Kerns (18).

9. Verfahren zur Herstellung eines Bodenbelags gemäß einem der Ansprüche 1 bis 7, **gekennzeichnet durch** die folgenden Schritte:
a') Ablegen eines bahnförmigen Schichtverbundes (24) auf einem Trägerband (52);
b') Auftragen einer Schicht aus Polyurethan auf den bahnförmigen Schichtverbund (24) zur Bildung des Kerns (18);
c') Auftragen eines Klebstoffs auf die Oberseite des Kerns (18); und
d') Aufkleben einer Fasermattenbahn (58), die aus Fasern aus Glas, PET, PP, Polyester oder nachwachsenden Rohstoffen gebildet wird und einseitig durch eine Sperrschicht (22) abgedichtet ist, auf die mit Klebstoff versehene Oberseite des Kerns (18), derart, dass sich die Sperrschicht (22) unten befindet.

10. Verfahren gemäß Anspruch 8 oder 9, **dadurch gekennzeichnet, dass** während oder nach Schritt c) bzw. c') der Polyurethan-Schicht zur Bildung des Kerns (18) Wärme zugeführt wird.

11. Verfahren gemäß Anspruch 8 oder 9, **dadurch gekennzeichnet, dass** die Fasermattenbahn eine Vliesbahn (58) ist.

12. Verfahren gemäß Anspruch 8 oder 9, **dadurch gekennzeichnet, dass** die Fasermattenbahn (58) eine Gewebebahn ist.

13. Verfahren gemäß einem der Ansprüche 8 bis 12, **dadurch gekennzeichnet, dass** die Sperrschicht (22) aus Polyolefin, Polyethylenterephtalat (PET), Polyamid (PA) oder thermoplastischem Polyurethan (TPU) gebildet ist.

14. Verfahren gemäß einem der Ansprüche 8 bis 12, **dadurch gekennzeichnet, dass** der Kein,(18) in Schritt b) bzw. b') aus einem Polyurethan gebildet wird, das aus einem Polyesterpolyol aus nachwachsenden Rohstoffen und aromatischem Isocyanat gewonnen wird.

15. Verfahren gemäß einem Ansprüche 8 bis 13, **dadurch gekennzeichnet, dass** der bahnförmige Schichtverbund (24) in Schritt d) bzw. a') in vorgefertigtem Zustand ab bzw. aufgelegt wird und zumindest eine Dekorschicht (14) umfasst, die aus einem Zellstoffpapier besteht, das mit Polyurethan imprägniert ist, eine auf der dem Kern abgewandten Seite der Dekorschicht (14) liegende Nutzschicht (12), die aus einem Polyurethan besteht, das aus einem Polyol und einem aliphatischen Isocyanat gewonnen wird, und eine Glasfasermatte (16) auf der dem Kern zugewandten Seite der Dekorschicht (14).

## Claims

1. Elastic floor covering (10) in form of a web product that can be rolled up, comprising a soft core (18) of polyurethane and a layered compound structure (24) disposed on the core (18), **characterized in that** the back of the floor covering (10) is formed by a fiber mat (20), the fibers of which consist of glass, PET, PP, polyester or renewable raw materials and which is sealed on the side facing the core (18) by a barrier layer (22).

2. The floor covering of claim 1, **characterized in that** the fibers form a non-woven.

3. The floor covering of claim 1, **characterized in that** the fibers are interwoven with one another to form a fabric mat.

4. The floor covering of one of the preceding claims, **characterized in that** the fiber mat (20) in glued to the back of the core (18).

5. The floor covering of one of the preceding claims, **characterized in that** the barrier layer (22) is formed of polyolefin, polyethylene terephthalate (PET), polyamide (PA) or a thermoplastic polyurethane (TPU).

6. The floor covering of one of the preceding claims, **characterized in that** the core (18) consists of a polyurethane, which is obtained from a polyester polyol of renewable raw materials and an aromatic isocyanate.

7. The floor covering of one of the preceding claims, **characterized in that** the layered compound structure (24) comprises at least one decorative layer (14), which consists of a fiber paper, which is impregnated with polyurethane, a wear-resistant use layer (12), which rests on the side of the decorative layer (14) averted from the core (18) and consists of polyurethane, which is obtained from a polyol and an aliphatic isocyanate, and a fiberglass mat (16).

8. A method for the production of a floor panel of one of the claims 1 to 7, **characterized by** the following steps:
a) depositing a fiber mat sheet (58), which is formed from fibers of glass, PET, PP, polyester or renewable raw material, and sealed on one side by a barrier layer (22), on a carrier strip (52) in such a manner that the barrier layer (22) is at the top;
b) applying a layer (62) of a polyurethane on the fiber mat sheet (58) for forming the core (18);
c) applying an adhesive on the upper side of the core (18); and
d) gluing a sheet-shaped compound structure (24) on the upper side of the core (18), which is provided with adhesive.

9. A method for the production of a floor covering according to one of the claims 1 to 7, **characterized by** the following steps:
a') depositing a sheet-shaped layered compound structure (24) on a carrier strip (52);
b') applying a layer (62) of polyurethane on the sheet-shaped layered compound structure (24) for forming the core (18);
c') applying an adhesive on the upper side of the core (18); and
d') gluing a fiber mat sheet (58), which is formed from fibers of glass, PET, PP, polyester or renewable raw materials, and sealed on one side by a barrier layer (22), on the upper side the core (18), which is provided with adhesive, in such a manner that the barrier layer (22) is at the bottom.

10. Method according to claim 8 or 9, **characterized in that** heat is supplied, during or after steps c) or c'), to the polyurethane layer (62) for forming the core (18).

11. Method of one claims 8 or 9, **characterized in that** the fiber mat sheet is a nonwoven (58).

12. Method of claim 8 or 9, **characterized in that** the fiber mat sheet (58) is a woven fabric sheet.

13. Method of one of claims 8 to 12, **characterized in that** the barrier layer (22) is made of polyolefine, polyethylene terephthalate (PET), polyamide (PA) or a thermoplastic polyurethane (TPU).

14. Method of one of claims 8 to 12, **characterized in that** the core (18) in step b) or b') consists of a polyurethane, which is obtained from a polyester polyol of renewable raw materials and an aromatic isocyanate.

15. Method of one of claims 8 to 13, **characterized in that** the sheet-shaped layered compound structure (24) in step d) or a') is deposited in a prefabricated state and comprises at least one decor layer (14) which consists of a fiber paper impregnated with polyurethane, a wear-resistant use layer (12) on the side of the decorative layer (14) averted from the core (18) and consists of a polyurethane which is obtained from a polyol and an aliphatic isocyanate, and a fiber glass mat (16) on the side of decorative layer (14) facing the core .

## Revendications

1. Revêtement de sol élastique (10) sous la forme d'une bande pouvant être enroulée, avec un noyau souple (18) en polyuréthane et un composite en couches (24) disposé sur le noyau (18), **caractérisé en ce que** le côté arrière du revêtement de sol (10) est constitué d'une natte de fibres (20), dont les fibres sont constituées de verre, de PET, de PP, de polyester ou de matières premières renouvelables et qui est étanchéifiée, sur le côté opposé au noyau (18), par une couche barrière (22).

2. Revêtement de sol selon la revendication 1, **caractérisé en ce que** les fibres forment un matériau non tissé.

3. Revêtement de sol selon la revendication 1, **caractérisé en ce que** les fibres sont tissées entre elles en une natte tissée.

4. Revêtement de sol selon l'une des revendications précédentes, **caractérisé en ce que** la natte de fibres (20) est collée sur le côté arrière du noyau (18).

5. Revêtement de sol selon l'une des revendications précédentes, **caractérisé en ce que** la couche barrière (22) est constituée de polyoléfine, de polyéthylène téréphtalate (PET), de polyamide (PA) ou d'un polyuréthane thermoplastique (TPU).

6. Revêtement de sol selon l'une des revendications précédentes, **caractérisé en ce que** le noyau (18) est constitué d'un polyuréthane qui est obtenu à partir d'un polyester polyol en matières premières renouvelables et d'un isocyanate aromatique.

7. Revêtement de sol selon l'une des revendications précédentes, **caractérisé en ce que** le composite en couches (24) comprend au moins une couche de décoration (14) qui est constituée d'un papier de cellulose imprégné de polyuréthanne, une couche utilitaire (12) se trouvant sur le côté de la couche de décoration (14) opposé au noyau (18), laquelle couche utilitaire est constituée d'un polyuréthane qui est obtenu à partir d'un polyol et d'un isocyanate aliphatique, et une natte de fibres de verre (16).

8. Procédé de fabrication d'un revêtement de sol selon l'une des revendications 1 à 7, **caractérisé par** les étapes suivantes :
a) pose d'une bande de natte de fibres (58) qui est constituée de fibres de verre, de PET, de PP, de polyester ou de matières premières renouvelables et est étanchéifiée d'un côté par une couche barrière (22), sur une bande de support (52), de façon à ce que la couche barrière (22) se trouve en haut ;
b) pose d'une couche (62) de polyuréthane sur la bande de natte de fibres (58) pour la formation du noyau (18) ;
c) application d'une colle sur le côté supérieur du noyau (18) ; et
d) collage d'un composite à couches (24) en forme de bande sur le côté supérieur du noyau (18) enduit de colle.

9. Procédé de fabrication d'un revêtement de sol selon l'une des revendications 1 à 7, **caractérisé par** les étapes suivantes :
a') pose d'un composite en couches (24) en forme de bande sur une bande de support (52) ;
b') pose d'une couche de polyuréthane sur le composite en couches (24) en forme de bande pour la formation du noyau (18) ;
c') application d'une colle sur le côté supérieur du noyau (18) ; et
d') collage d'une bande de natte de fibres (58) qui est constituée de fibres de verre, de PET, de PP, de polyester ou de matières premières renouvelables et est étanchéifiée d'un côté par une couche barrière (22), sur le côté supérieur du noyau (18) enduit de colle, de façon à ce que la couche barrière (22) se trouve en bas.

10. Procédé selon la revendication 8 ou 9, **caractérisé en ce que**, pendant ou après l'étape c) ou c') de la couche de polyuréthane, de la chaleur est apportée pour la formation du noyau (18).

11. Procédé selon la revendication 8 ou 9, **caractérisé en ce que** la bande de natte de fibres est une bande non tissée (58).

12. Procédé selon la revendication 8 ou 9, **caractérisé en ce que** la bande de natte de fibres (58) est une bande tissée.

13. Procédé selon l'une des revendications 8 à 12, **caractérisé en ce que** la couche barrière (22) est constituée de polyoléfine, de polyéthylène téréphtalate (PET), de polyamide (PA) ou de polyuréthane thermoplastique (TPU).

14. Procédé selon l'une des revendications 8 à 12, **caractérisé en ce que** le noyau (18) est formé, dans l'étape b) ou b'), d'un polyuréthane, qui est obtenu à partir d'un polyester polyol en matières premières renouvelables et d'un isocyanate aromatique.

15. Procédé selon l'une des revendications 8 à 13, **caractérisé en ce que** le composite à couches (24) en forme de bande est posé ou appliqué, dans l'étape d) ou a'), dans l'état préfabriqué et comprend au moins une couche de décoration (14) qui est constituée d'un papier de cellulose imprégné de polyuréthane, une couche utilitaire (12) se trouvant sur le côté de la couche de décoration (14) opposé au noyau, laquelle couche utilitaire est constituée d'un polyuréthane qui est obtenu à partir d'un polyol et d'un isocyanate aliphatique, et une natte de fibres de verre (16) sur le côté de la couche de décoration (14) orienté vers le noyau.
